# EUROPEAN PATENT APPLICATION

(11) **EP 4 534 767 A1**
(43) Date of publication of application: **09.04.2025**
(21) Application number: 23814971.0
(22) Date of filing: 17.05.2023
(51) Int. Cl.: E03C 1/084

(54) **MICROBUBBLE BUBBLER AND WATER OUTLET APPARATUS**

(30) Priority: 02.06.2022 CN 202210626316
(71) Applicant: Xiamen Solex High-Tech Industries Co., Ltd., Xiamen, Fujian 361028 (CN)
(72) Inventor: XIE, Bangchao, Xiamen, Fujian 361028 (CN); CHEN, Bin, Xiamen, Fujian 361028 (CN); LIN, Xiaolong, Xiamen, Fujian 361028 (CN); CHEN, Donghai, Xiamen, Fujian 361028 (CN)
(74) Representative: Verscht, Thomas Kurt Albert
(86) International application number: PCT/CN2023/094892
(87) International publication number: WO 2023/231786

(57) **Abstract**

A microbubble bubbler comprises a filtration member (1), a gas-water mixing assembly (2) and a bubble cutting assembly (3); the filtration member (1) is used for filtering water flow; the gas-water mixing assembly (2) is used for forming the water flow into bubble water, and the water outlet direction of the gas-water mixing assembly is a first direction; the bubble cutting assembly (3) is used for cutting the bubble water and cutting bubbles in the bubble water into microbubbles, so as to form microbubble water; the bubble cutting assembly (3) at least partially forms an angle with respect to the first direction; the bubble cutting assembly (3) is provided with an impurity discharge channel (31) used for discharging impurities, wherein the angle is not equal to 90 degrees.

## Description

The present disclosure claims priority to Chinese patent application number 202210626316.6 with a title "A micro-bubble bubbler and a water outlet device", filed on June 2, 2022. All content of Chinese patent application number is incorporated herein by reference.

### FIELD OF THE DISCLOSURE

The present disclosure relates to the technical field of water outlet devices, and in particular relates to a micro-bubble bubbler and a water outlet device.

### BACKGROUND OF THE DISCLOSURE

In the related art, when using a spray head for flushing and showering, some functional substances, such as essential oils and perfumes, are usually required to be added to have additional functions while spraying water. If the water itself or these functional substances have more impurities, it is easy for the impurities to be left in a micro-bubble bubbler of the spray head, thereby causing a clogging risk and affecting a service life.

### BRIEF SUMMARY OF THE DISCLOSURE

The present disclosure provides a micro-bubble bubbler and a water outlet device, effects for discharging impurities are good, and a service life is long.

An aspect of the present disclosure provides a micro-bubble bubbler, it comprises:
A filter component for filtering water flow;
An air-water mixing component for converting the water flow into bubble water, and a water outlet direction of the air-water mixing component is a first direction;
A bubble cutting component for cutting the bubble water so as to cut bubbles in the bubble water into tiny bubbles to form micro-bubble water;
At least part of the bubble cutting component forms an angle with the first direction, and the bubble cutting component comprises one or more impurity discharge passages, and the one or more impurity discharge passages are used to discharge impurities; and
Wherein, the angle is not equal to 90 degrees.

In an embodiment of the present disclosure, the one or more impurity discharge passages are disposed at one or more positions of the bubble cutting component farthest from the air-water mixing component along the water flow direction.

In an embodiment of the present disclosure, the bubble cutting component is concave in a direction away from the air-water mixing component to form one or more concave structures along the water flow direction.

In an embodiment of the present disclosure, the one or more impurity discharge passages are disposed at one or more maximum-groove-depth positions of the one or more concave structures along the water flow direction.

In an embodiment of the present disclosure, the bubble cutting component protrudes in a direction adjacent to the air-water mixing component to form one or more protruding structures.

In an embodiment of the present disclosure, the one or more impurity discharge passages are disposed on one or more minimum-height positions of the one or more protruding structures along the water flow direction.

In an embodiment of the present disclosure, the bubble cutting component is concave in a direction away from the air-water mixing component to form one or more concave structures along the water flow direction, and the bubble cutting component protrudes in a direction adjacent to the air-water mixing component to form one or more protruding structures.

In an embodiment of the present disclosure, the one or more concave structures are coaxially arranged relative to the air-water mixing component, and the one or more protruding structure are disposed around one or more peripheries of the one or more concave structures; or,

The one or more protruding structures are coaxially arranged relative to the air-water mixing component, and the one or more concave structures are disposed around one or more peripheries of the one or more protruding structures.

In an embodiment of the present disclosure, the one or more impurity discharge passages are disposed at one or more centers of the one or more concave structures; and/or,

The one or more impurity discharge passages are disposed at one or more positions of the one or more protruding structures farthest from one or more centers thereof.

In an embodiment of the present disclosure, the number of the one or more protruding structures is multiple, and the one or more concave structures are disposed between two adjacent ones of the one or more protruding structures; and/or,

The number of the one or more concave structures are multiple, and the one or more protruding structures are disposed between two adjacent ones of the one or more concave structures.

**In** an embodiment of the present disclosure, the one or more protruding structures and the one or more concave structures adjacent thereof are at least partially overlapped.

**In** an embodiment of the present disclosure, the one or more impurity discharge passages are one or more through holes disposed on the bubble cutting component.

**In** an embodiment of the present disclosure, a cross section of a through hole is any one of a circle, an arc, a triangle and a polygon.

**In** an embodiment of the present disclosure, the bubble cutting component comprises a plurality of filter screens that are stacked along the water flow direction;
Wherein, at least some filter screens in the plurality of filter screens have different mesh numbers.

**In** an embodiment of the present disclosure, it further comprises a water outlet cover, the filter component is disposed upstream of the air-water mixing component along the water flow direction; and the bubble cutting component is disposed between the water outlet cover and the air-water mixing component.

Another aspect of the present disclosure provides a water outlet device, it comprises the micro-bubble bubbler.

The micro-bubble bubbler provided in the present disclosure achieves the primary filtration along a flowing water flow to prevent larger impurities from entering into the micro-bubble bubbler by setting the filtering component; the air is introduced into the air-water mixing component and mixed with the water flow to generate the bubbles to form the bubble water by setting the air-water mixing component; and the bubble cutting component can cut the bubbles in the bubble water into the tiny bubbles to form the micro-bubble water by setting a bubble cutting component, so that the micro-bubble water can take away the dirt in the pores or the fruits and vegetables by the tiny bubbles, thereby improving the cleanliness.

At the same time, at least part of the bubble cutting component forms an angle with the first direction, the angle is not equal to 90 degrees, the bubble cutting component is obliquely disposed instead of being horizontally disposed, if the impurities are left on the bubble cutting component, the bubble cutting component acts as a guiding slope, when high-speed spraying water flow is sprayed, the impurities will slide down along the bubble cutting component until sliding to a bottom position of the bubble cutting component along the water flow direction, that is, the impurities will accumulate at the bottom position of the bubble cutting component 3 instead of spreading throughout the entire bubble cutting component, thereby reducing the clogging risk of the entire bubble cutting component. At the same time, in order to prevent the impurities of the micro-bubble bubbler from being left on the bubble cutting component, the bubble cutting component comprises the one or more impurity discharge passages, and the one or more impurity discharge passages provide one or more passages for discharging the impurities to discharge the impurities from an inner side of the micro-bubble bubbler.

Embodiments of the present disclosure provides the water outlet device, it comprises the micro-bubble bubbler.

The micro-bubble bubbler provided in the present disclosure achieves the primary filtration along a flowing water flow to prevent larger impurities from entering into the micro-bubble bubbler by setting the filtering component; the air is introduced into the air-water mixing component and mixed with the water flow to generate the bubbles to form the bubble water by setting the air-water mixing component; and the bubble cutting component can cut the bubbles in the bubble water into the tiny bubbles to form the micro-bubble water by setting a bubble cutting component, so that the micro-bubble water can take away the dirt in the pores or the fruits and vegetables by the tiny bubbles, thereby improving the cleanliness.

At the same time, at least part of the bubble cutting component forms an angle with the first direction, the angle is not equal to 90 degrees, the bubble cutting component is obliquely disposed instead of being horizontally disposed, if the impurities are left on the bubble cutting component, the bubble cutting component acts as a guiding slope, when high-speed spraying water flow is sprayed, the impurities will slide down along the bubble cutting component until sliding to the bottom position of the bubble cutting component along the water flow direction, that is, the impurities will accumulate at the bottom position of the bubble cutting component 3 instead of spreading throughout the entire bubble cutting component, thereby reducing the clogging risk of the entire bubble cutting component. At the same time, in order to prevent the impurities of the micro-bubble bubbler from being left on the bubble cutting component, the bubble cutting component comprises the one or more impurity discharge passages, and the one or more impurity discharge passages provide one or more passages for discharging the impurities to discharge the impurities from an inner side of the micro-bubble bubbler.

### BRIEF DESCRIPTION OF THE DRAWINGS

The present disclosure can be better understood in combination with the embodiments illustrated in the accompanying drawings. The components in the accompanying drawings are not necessary to be according to scales, and related elements can be omitted to emphasize and clearly describe the technical features of the present disclosure. In addition, related features or components can have different arrangements as known in the art. Further, in the accompanying drawings, the same reference numbers in various drawings represent the same or similar components. Wherein:
FIG. 1 illustrates a diagrammatic view of a structure of a micro-bubble bubbler in Embodiment 1;
FIG. 2 illustrates a sectional view of the micro-bubble bubbler in Embodiment 1;
FIG. 3 illustrates a diagrammatic view of an exploded structure of the micro-bubble bubbler in Embodiment 1;
FIG. 4 illustrates a top view of the micro-bubble bubbler in Embodiment 1;
FIG. 5 illustrates a bottom view of the micro-bubble bubbler in Embodiment 1;
FIG. 6 illustrates a diagrammatic view of a structure illustrating a bubble cutting component in the micro-bubble bubbler in Embodiment 1;
FIG. 7 illustrates a first diagrammatic view of a structure of the bubble cutting component in the micro-bubble bubbler in Embodiment 1;
FIG. 8 illustrates a second diagrammatic view of the structure of the bubble cutting component in the micro-bubble bubbler in Embodiment 1;
FIG. 9 illustrates a diagrammatic view of a structure illustrating a bubble cutting component in a micro-bubble bubbler in Embodiment 2;
FIG. 10 illustrates a first diagrammatic view of a structure of the bubble cutting component in the micro-bubble bubbler in Embodiment 2;
FIG. 11 illustrates a second diagrammatic view of the structure of the bubble cutting component in the micro-bubble bubbler in Embodiment 2;
FIG. 12 illustrates a diagrammatic view of a structure illustrating a bubble cutting component in a micro-bubble bubbler in Embodiment 3;
FIG. 13 illustrates a first diagrammatic view of a structure of the bubble cutting component in the micro-bubble bubbler in Embodiment 3;
FIG. 14 illustrates a second diagrammatic view of the structure of the bubble cutting component in the micro-bubble bubbler in Embodiment 3;
FIG. 15 illustrates a diagrammatic view of a structure of a bubble cutting component in a micro-bubble bubbler in Embodiment 4.

Reference numbers are described as follows:
First chamber 100; second chamber 200;
Filter component 1; air-water mixing component 2; bubble cutting component 3; water outlet cover 4;
Diverter 21; first water inlet hole 211;
Mixer 22; second water inlet hole 221;
Impurity discharge passage 31; concave structure 32; protruding structure 33; filter screen 34.

### DETAILED DESCRIPTION OF THE EMBODIMENTS

The technical solutions in the embodiments of the present disclosure will be described clearly and completely in combination with the accompanying drawings in the embodiments of the present disclosure. The cited embodiments described in the specification are merely used for descriptive purposes and are not used to limit the protection scope of the present disclosure, and therefore, it should be understood that various modifications and variations of the cited embodiments can be made without departing from the protection scope of the present disclosure.

In the description of the present disclosure, unless otherwise expressly specified and limited, the terms "first" and "second" are merely used for the descriptive purposes and should not be understood as indicating or implying relative importance; and the term "plurality" refers to two or more; and the term "and/or" comprises any combination and all combinations of one or more related listed items. In particular, the reference to "the/said" object or "one" object is also intended to indicate a possible one of a plurality of such objects.

Unless otherwise expressly specified and limited, it is noted that the terms "connected", "fixed", should develop a broad understanding, for example, "connected" can be a fixed connection, or a detachable connection, or an integrated connection, or an electrical connection, or a signal connection; and "connected" can be a direct connection, or an indirect connection via an intermediate medium. The specific meaning of the terms in the present disclosure can be understood in specific conditions for person of skill in the art.

Further, in the description of the present disclosure, it should be understood that the directional terms, such as "upper", "lower", "inner", and "outer" described in the cited embodiments of the present disclosure are described according to angles shown in the accompanying drawings and should not be understood as limitations of the cited embodiments of the present disclosure. It should also be understood that, in the context, when an element or feature is mentioned to be connected to "upper", "lower", or "inner", "outer" of another (one or more) element, it can not only be directly connected to "upper", "lower", or "inner", "outer" of another (one or more) elements, but can be also indirectly connected to "upper", "lower", or "inner", "outer" of another (one or more) elements through an intermediate element.

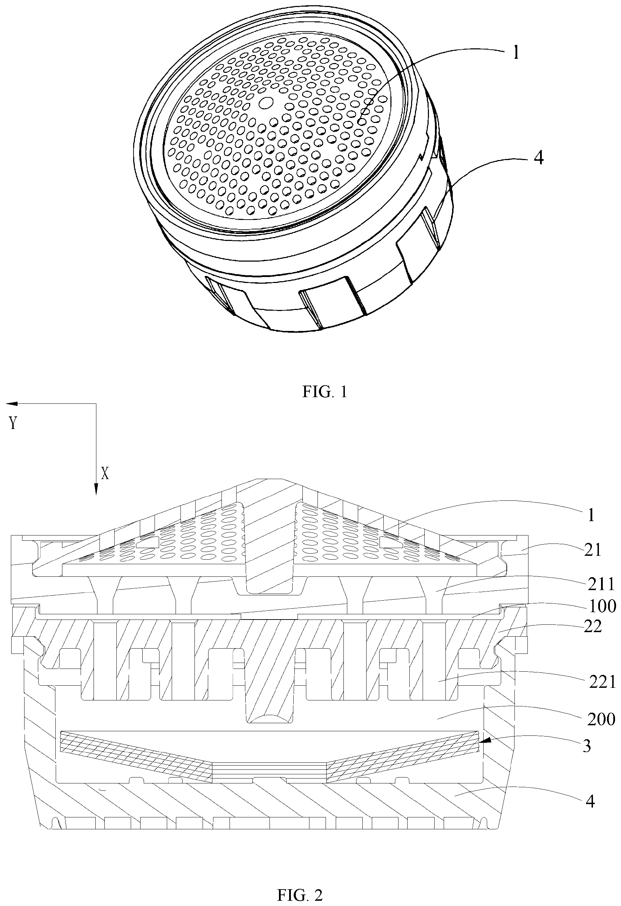

An embodiment of the present disclosure provides a micro-bubble bubbler, referring to FIGS. 1-3, the micro-bubble bubbler comprises a filter component 1, an air-water mixing component 2 and a bubble cutting component 3, the filter component 1 is used to filter water flow, the air-water mixing component 2 is used to convert the water flow into bubble water, a water outlet direction of the air-water mixing component 2 is a first direction, and the bubble cutting component 3 is used to cut bubbles in the bubble water into tiny bubbles to form micro-bubble water.

The micro-bubble bubbler provided in this embodiment achieves a primary filtration of the water flow flowing along a water flow direction to prevent impurities from entering into the micro-bubble bubbler by setting the filter component 1. Air is introduced into the air-water mixing component 2 to be mixed with the water flow to generate the bubbles to form the bubble water by setting the air-water mixing component 2. The bubble cutting component 3 is configured to cut the bubbles in the bubble water into the tiny bubbles to form the micro-bubble water by setting the bubble cutting component 3, so that the micro-bubble water takes away dirt in pores or fruits and vegetables by the tiny bubbles, thereby improving cleanliness.

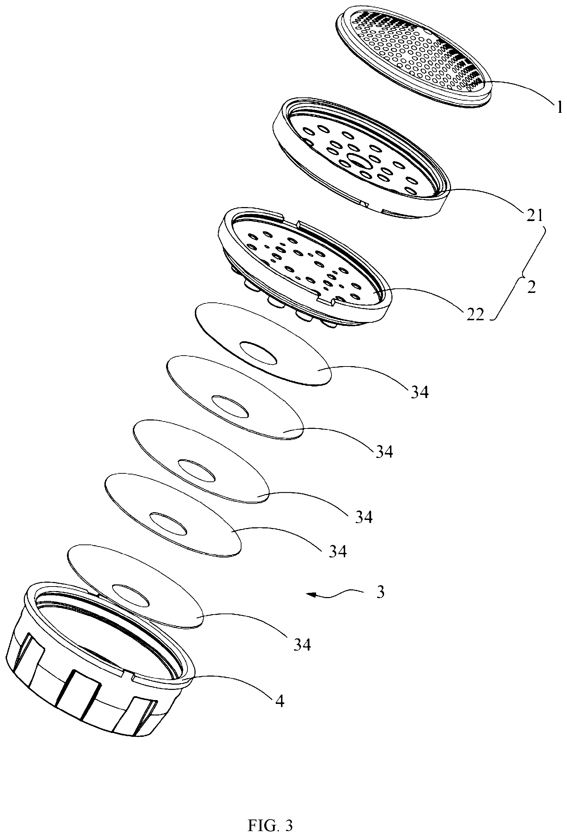

In order to avoid a clogging risk caused by impurities left on the bubble cutting component 3 when the bubble cutting component 3 cuts the bubble water, thereby affecting a service life of the bubble cutting component 3. Therefore, referring to FIGS. 2 and 3, at least part of the bubble cutting component 3 provided in this embodiment forms an angle with the first direction, and the bubble cutting component 3 comprises an impurity discharge passage 31 along the water flow direction, and the impurity discharge passage 31 is used to discharge the impurities in the micro-bubble water. Therein, the angle is less than 90 degrees or greater than 90 degrees.

The micro-bubble bubbler provided in this embodiment forms an angle with the first direction through at least part of the bubble cutting component 3, the angle is less than 90 degrees or greater than 90 degrees, the bubble cutting component 3 is obliquely disposed instead of being horizontally disposed, if the impurities are left on the bubble cutting component 3, the bubble cutting component 3 acts as a guiding slope, when high-speed spraying water flow is sprayed, the impurities will slide down along the bubble cutting component 3 until sliding to a bottom position of the bubble cutting component 3 along the water flow direction, that is, the impurities will accumulate at the bottom position of the bubble cutting component 3 instead of spreading throughout the entire bubble cutting component 3, thereby reducing the clogging risk of the entire bubble cutting component 3. At the same time, in order to prevent the impurities of the micro-bubble bubbler from being left on the bubble cutting component 3, the bubble cutting component 3 comprises the impurity discharge passage 31, and the impurity discharge passage 31 provides a passage for discharging the impurities to discharge the impurities from an inner side of the micro-bubble bubbler.

It can be understood that the impurity discharge passage 31 is disposed along the water flow direction, so that the impurity discharge passage 31 and a flow direction of the water flow are in the same direction, and spray of the water flow provides power for a movement of the impurities, so that the impurities are smoothly discharged from the impurity discharge passage 31, and impurity discharging effects are good.

It should be particularly noted that if the water flow direction is a vertical direction, the water outlet direction of the air-water mixing component 2 can be the vertical direction or have a certain angle with the vertical direction, it can be understood that when the water outlet direction of the air-water mixing component 2 is the vertical direction, that is, the water flow direction is the first direction, a second direction can be specifically a horizontal direction, at this time, the first direction and the second direction are arranged perpendicular to each other, as shown in FIG. 2, an arrow direction X represents the first direction, and an arrow direction Y represents the second direction. Therein, the filter component 1, the air-water mixing component 2 and the bubble cutting component 3 are arranged along the water flow direction, that is, the filter component 1, the air-water mixing component 2 and the bubble cutting component 3 are arranged in sequence from top to bottom.

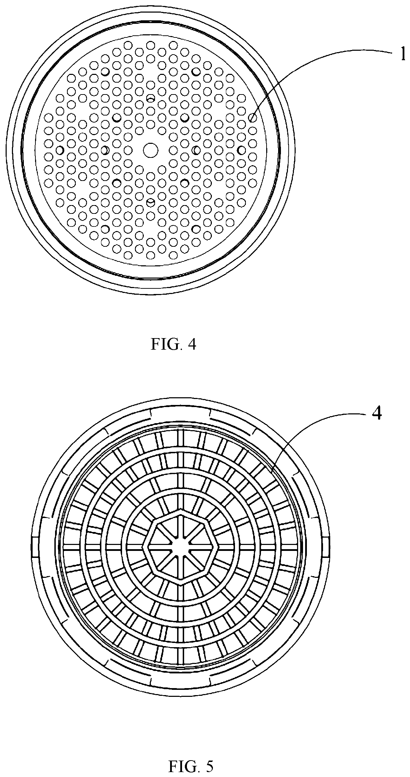

In an embodiment, as shown in FIGS. 2-4, the filter component 1 comprises a support member and a filter member, the support member is an annular structure, the support member is used to install and support the filter member, and the filter member is a filter screen structure. Therein, the filter member is at least partially obliquely disposed relative to the second direction.

In this solution, the filter member is obliquely disposed, if the impurities left on the filter member is too much, the filter member acts as a guiding slope, when the high-speed spraying water flow is sprayed, the impurities will slide down along the filter member until sliding to a bottom position of the filter member along the water flow direction, that is, the impurities will accumulate at the bottom position of the filter member instead of spreading throughout the entire filter member, reducing a clogging risk of the entire filter member. The filter member can also be disposed horizontally, and the micro-bubble bubbler can be detached for washing the impurities accumulated on the filter member. The micro-bubble bubbler can also be provided without the filter member.

In an embodiment, as shown in FIGS. 2, 3 and 5, the micro-bubble bubbler further comprises a water outlet cover 4, the filter component 1 is disposed upstream of the air-water mixing component 2 along the water flow direction, and the bubble cutting component 3 is disposed between the water outlet cover 4 and the air-water mixing component 2.

The primary filtration of the water flow flowing along the water flow direction is achieved to prevent larger impurities from entering into the micro-bubble bubbler by setting the filter component 1 upstream of the air-water mixing component 2 along the water flow direction. The bubble cutting component 3 is disposed between the water outlet cover 4 and the air-water mixing component 2, that is, the water outlet cover 4 is disposed downstream of the bubble cutting component 3 along the water flow direction for water outflow with the tiny bubbles.

It should be particularly noted that the water outlet cover 4 comprises water outlet holes, the water outlet holes are in communication with the impurity discharge passage 31, so that the impurities flowing out of the impurity discharge passage 31 are discharged through the water outlet holes, and the water outlet hole provides a discharging space for finally discharging the impurities, avoiding a blockage of the impurity discharge passage 31, so as to ensure a cleanliness inside of the micro-bubble bubbler.

In an embodiment, as shown in FIGS. 2 and 3, the air-water mixing assembly 2 comprises a diverter 21 and a mixer 22. The water outlet cover 4 is buckled to the mixer 22 and the diverter 21, and an air inlet flow passage is formed between a side wall of the mixer 22 and a side wall of the diverter 21, and the air inlet flow passage is in communication with a first chamber 100. A second chamber 200 is formed between the water outlet cover 4 and the mixer 22, and the bubble cutting component 3 is disposed in the second chamber 200. Alternatively, the air inlet flow passage can be formed between a side wall of the water outlet cover 4 and the side wall of the diverter 21.

The water flow flows through a first water inlet hole 211 and a second water inlet hole 221 in sequence, as a flowing area of the second water inlet hole 221 is larger than a flowing area of the first water inlet hole 211, according to the Bernoulli equation, a preset negative pressure will be generated in the second water inlet hole 221, so that external air passes through the air inlet flow passage and the first chamber 100 in sequence and is sucked into the second water inlet hole 221 to form mixed water flow having preset bubbles with the water flow, and the mixed water flow enters into the second chamber 200.

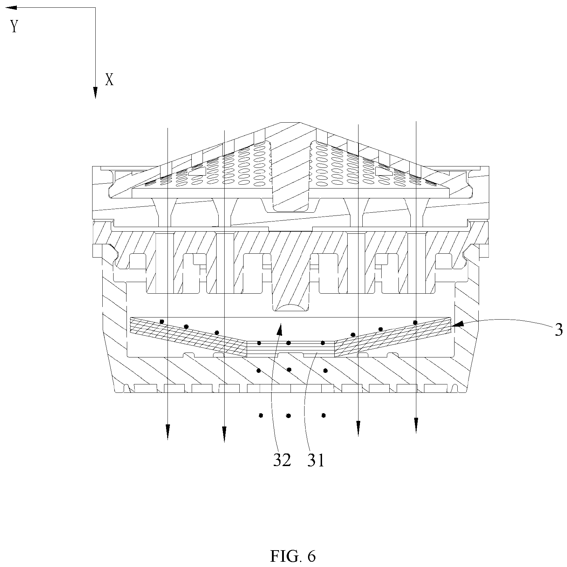

In an embodiment, as shown in FIG.6, the impurity discharge passage 31 is disposed on a position of the bubble cutting component 3 farthest from the air-water mixing component 2 along the water flow direction.

By setting the impurity discharge passage 31 on the position of the bubble cutting component 3 farthest from the air-water mixing component 2, that is, the impurity discharge passage 31 is equivalent to be disposed on the bottom position of the bubble cutting component 3 along the water flow direction, as the impurities will slide down along the bubble cutting component 3 until sliding to the bottom position of the bubble cutting component 3 along the water flow direction, so that the impurity discharge passage 31 can just catches the impurities sliding down, that is, the impurities directly face the impurity discharge passage 31, ensuring all of the impurities to enter into the impurity discharge passage 31, under flushing of the high-speed spraying water flow, the impurities are more easily to flush into the impurity discharge passage 31, thereby achieving a process for discharging the impurities.

In an embodiment, as shown in FIG.6, the bubble cutting component 3 is concave in a direction away from the air-water mixing component 2 to form a concave structure 32 along the water flow direction.

The bubble cutting component 3 is concave in the direction away from the air-water mixing component 2, for example, the formed concave structure 32 is a horn-shaped structure, a large opening end of the horn-shaped structure faces the air-water mixing component 2, and a small opening end of the horn-shaped structure faces the water outlet cover 4. At this time, two side walls of the concave structure 32 are obliquely disposed relative to the second direction, so that the impurities can slide along a groove wall that is obliquely disposed, and the concave structure 32 serves to accumulate the impurities. It can be understood that the impurities are accumulated to a groove bottom of the concave structure 32 along the groove wall without spreading throughout the entire side walls, avoiding blockage of the groove wall of the concave structure 32 in a large scale.

**In** an embodiment, the impurity discharge passage 31 is disposed at a maximum-groove-depth position of the concave structure 32 along the water flow direction.

It is equivalent that the impurity discharge passage 31 is disposed on a position of the groove bottom of the concave structure 32 by setting the impurity discharge passage 31 on the maximum-groove-depth position of the concave structure 32, as a large amount of the impurities are accumulated to the groove bottom of the concave structure 32 along the groove wall of the concave structure 32, the impurity discharge passage 31 just directly faces a position where the impurities are accumulated in the bubble cutting component 3, ensuring the impurities to be directly discharged from the impurity discharge passage 31.

It can be understood that if the concave structure 32 is a symmetric structure relative to an axis of a micro-bubble component, at this time, the impurity discharge passage 31 is disposed on a center position of the concave structure 32 along the second direction, which is equivalent to set the impurity discharge passage 31 adjacent to an accumulated point.

It can be understood that in some embodiments, the concave structure 32 can also be an asymmetric structure relative to the axis of the micro-bubble component, at this time, the impurity discharge passage 31 merely needs to be disposed at a lowest point of the concave structure 32 along the water flow direction.

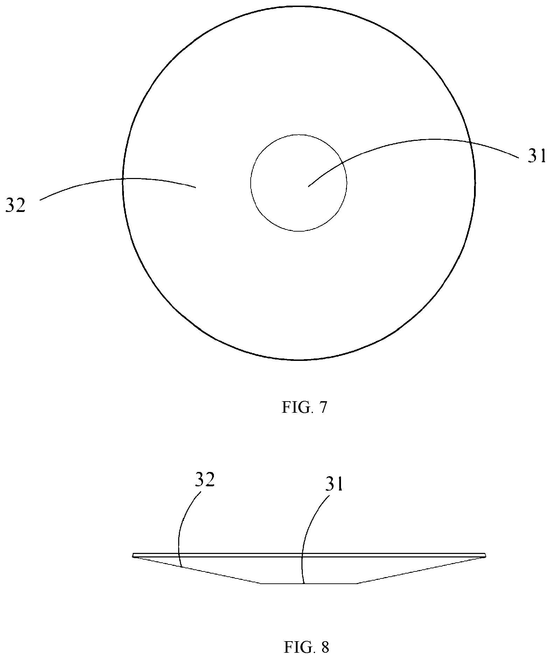

**In** an embodiment, as shown in FIGS. 6-8, the impurity discharge passage 31 is a through hole disposed on the bubble cutting component 3. The impurity discharge passage 31 can be formed by directly forming the through hole on the bubble cutting component 3, a structure is simple, is easy to implement, and has a relatively low cost for a production process.

Specifically, a shape of a cross section of the through hole is any one of a circle, an arc, a triangle and a polygon. In this embodiment, a specific shape of the through hole, i.e., the impurity discharge passage 31, is not limited and can be adjusted according to actual production needs.

It can be understood that the impurity discharge passage 31 disposed on the concave structure 32 can be a circular hole structure, so that the impurities along a circumferential direction of the bubble cutting component 3 are evenly accumulated to the center position.

It should be noted that the concave structure 32 and the water outlet cover 4 surround to form a conical structure, a cross section of the conical structure is a triangular structure, and at this time, the maximum-groove-depth position of the concave structure 32 along the water flow direction is a position where the concave structure 32 and the water outlet cover 4 contact each other; and the concave structure 32 and the water outlet cover 4 surround to form a structure with a cross section as a frustum, a minimum-height position of the concave structure 32 along the water flow direction is a bottom surface of the structure shaped in the frustum along the water flow direction, and at this time, the bottom surface can provide a supporting force for the bubble cutting component 3 from the water outlet cover 4 and can provide a larger installation space for the impurity discharge passage 31.

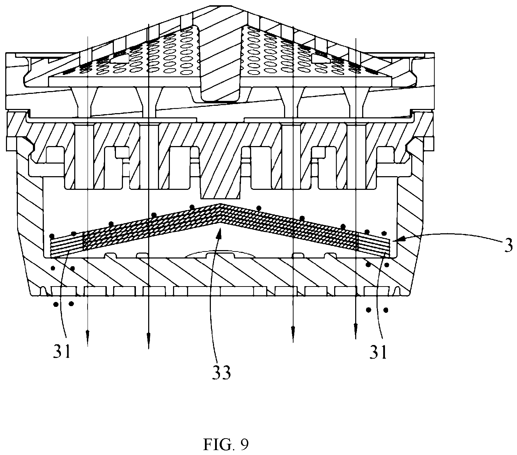

In an embodiment, as shown in FIG. 9, the bubble cutting component 3 protrudes in a direction adjacent to the air-water mixing component 2 to form a protruding structure 33 along the water flow direction.

The bubble cutting component 3 protrudes in the direction adjacent to the air-water mixing component 2, for example, the formed protruding structure 33 is a horn-shaped structure, a large opening end of the horn-shaped structure faces the water outlet cover 4, and a small opening end of the horn-shaped structure faces the air-water mixing component 2. At this time, two side walls of the protruding structure 33 are obliquely disposed relative to the second direction, so that the impurities can slide along the side walls that are obliquely disposed, and the protruding structure 33 serves to disperse the impurities. It can be understood that the impurities are dispersed to a bottom of the protruding structure 33 along the side walls without spreading throughout the entire side walls, avoiding blockage of the side walls of the protruding structure 33 in a large scale.

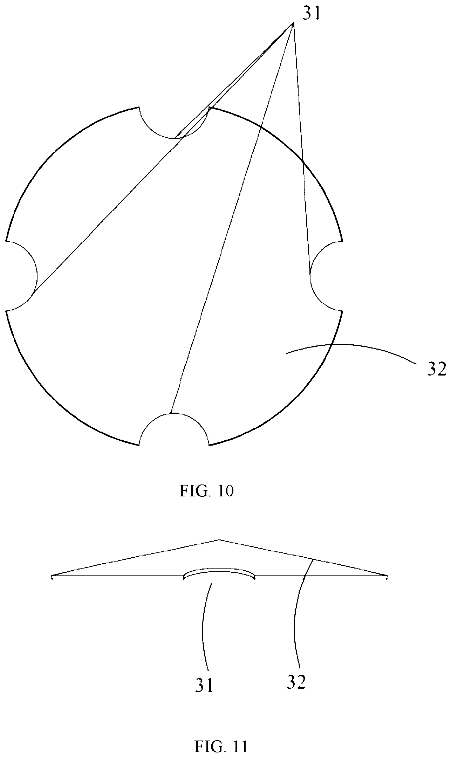

**In** an embodiment, as shown in FIGS. 9-11, one or more impurity discharge passages 31 are disposed at the minimum-height position of the protruding structure 33 along the water flow direction.

It is equivalent that the one or more impurity discharge passages 31 are disposed on a position at an edge of the protruding structure 33 by setting the one or more impurity discharge passages 31 on the minimum-height position of the protruding structure 33, as a large amount of the impurities are dispersed to the edge of the protruding structure 33 along the side walls of the protruding structure 33, the one or more impurity discharge passages 31 just face a position where the impurities are dispersed in the bubble cutting component 3, ensuring the impurities to be directly discharged from the one or more impurity discharge passages 31.

It should be understood that if the protruding structure 33 is a symmetrical structure relative to the axis of the micro-bubble component, at this time, the one or more impurity discharge passages 31 are disposed on a position of the protruding structure 33 farthest from a center thereof along the second direction, which is equivalent that the one or more impurity discharge passages 31 are disposed on a position adjacent to the dispersed point.

It should be understood that in some embodiments, the protruding structure 33 can also be an asymmetrical structure relative to the axis of the micro-bubble component, and at this time, the one or more impurity discharge passages 31 merely need to be disposed at a lowest point of the protruding structure 33 along the water flow direction.

It should be understood that, as shown in FIGS. 9-11, the one or more impurity discharge passages 31 disposed on the protruding structure 33 can be one or more arc-shaped hole structures, such as one or more semi-circular hole structures, it is equivalent that the edge of the bubble cutting component 3 extends inward to form the one or more semi-circular hole structures, so that the impurities are evenly dispersed to the position of the edge of the bubble cutting component 3 along the circumferential direction. A number of the one or more impurity discharge passages 31 can be multiple, and multiple of the one or more impurity discharge passages 31 are evenly disposed along an axial direction of the bubble cutting component 3 to ensure uniformity in dispersing the impurities.

It should be noted that the protruding structure 33 and the water outlet cover 4 surround to form a conical structure, a cross section of the conical structure is a triangular structure, at this time, a minimum-height position of the protruding structure 33 along the water flow direction is a position where the protruding structure 33 and the water outlet cover 4 contact each other, and the protruding structure 33 and the water outlet cover 4 can also surround to define a structure with a cross section as a pentagon, at this time, the minimum-height position of the protruding structure 33 along the water flow direction is a lower end position of the side walls of the protruding structure 33.

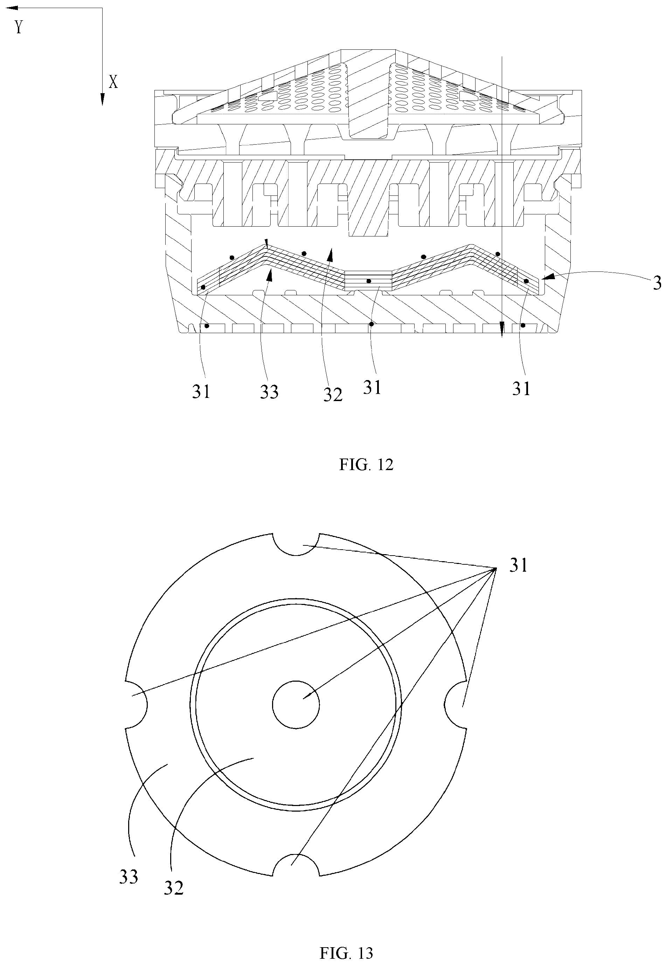

In an embodiment, as shown in FIGS. 12-14, the bubble cutting component 3 is concave in the direction away from the air-water mixing component 2 along the water flow direction to form one or more concave structures 32, and the bubble cutting component 3 protrudes in the direction adjacent to the air-water mixing component 2 to form one or more protruding structures 33.

In other words, the bubble cutting component 3 comprises not only the one or more concave structures 32, or the bubble cutting component 3 comprises not only the one or more protruding structures 33, the bubble cutting component 3 can comprise the one or more concave structures 32 and the one or more protruding structures 33 synchronously, as one or more groove walls of the one or more concave structures 32 and one or more side walls of the one or more protruding structures 33 are both obliquely disposed relative to the second direction, thus ensuring smoothness and reliability of downward sliding of the impurities.

It can be understood that if a number of the one or more protruding structures 33 and the one or more concave structures 32 is one, a cross section of the bubble cutting component 3 forms a folded line structure.

In an embodiment, the protruding structure 33 and the concave structure 32 adjacent to it are at least partially overlapped.

With respect to the protruding structure 33 and the concave structure 32 that are adjacent, the protruding structure 33 and the concave structure 32 will have a common inclined surface, that is, the side walls of the protruding structure 33 are just the groove wall of the concave structure 32.

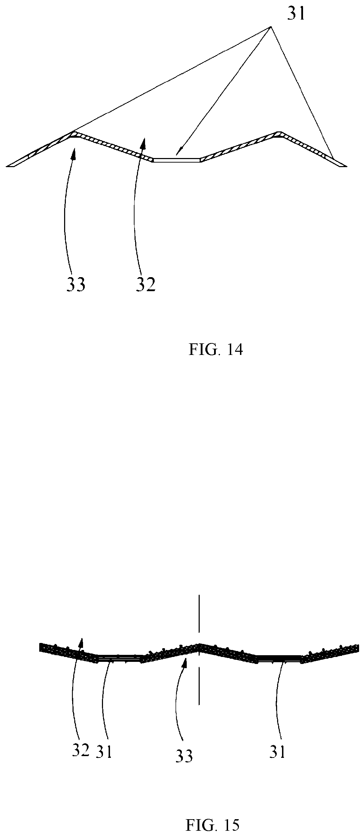

In an embodiment, as shown in FIGS. 12-14, the concave structure 32 is coaxially disposed relative to the air-water mixing component 2, and the protruding structure 33 is disposed around a periphery of the concave structure 32; or, as shown in FIG. 15, the protruding structure 33 is coaxially disposed relative to the air-water mixing component 2, and the concave structure 32 is disposed around a periphery of the protruding structure 33.

As shown in FIGS. 12-14, by coaxially setting the concave structure 32 relative to the air-water mixing component 2, the protruding structure 33 is disposed around the periphery of the concave structure 32, and that is, the concave structure 32 is disposed at a center position of the bubble cutting component 3. When the bubble cutting component 3 is symmetrical relative to an axis of the air-water mixing component 2, with respect to a half side of the bubble cutting component 3, it is equivalent to divide a radius of the bubble cutting component 3 into two parts, so that the two parts have two inclined side walls of the protruding structure 33, so as to achieve a segmented treatment of a radius part of the bubble cutting component 3, a time is saved for the impurities on a top of the bubble cutting component 3 to slide to a bottom along the water flow direction, and timeliness and effectiveness of discharging the impurities is improved.

As shown in FIG. 15, by coaxially setting the protruding structure 33 relative to the air-water mixing component 2, the concave structure 32 is disposed around the periphery of the protruding structure 33, and that is, the protruding structure 33 is disposed at a center position of the bubble cutting component 3. When the bubble cutting component 3 is symmetrical relative to an axis of the air-water mixing component 2, with respect to a half side of the bubble cutting component 3, it is equivalent to divide a radius of the bubble cutting component 3 into two parts, so that the two parts have two inclined groove walls of a groove structure, so as to achieve a segmented treatment of a radius part of the bubble cutting component 3, a time is saved for the impurities on the top of the bubble cutting component 3 to slide to a bottom along the water flow direction, and timeliness and effectiveness of discharging the impurities is improved.

In an embodiment, the one or more impurity discharge passages 31 are disposed on the center position of the concave structure 32 along the second direction; and/or, the one or more impurity discharge passages 31 are disposed at a position of the protruding structure 33 farthest from a center thereof along the second direction.

As shown in FIGS. 12-14, when the concave structure 32 is coaxially disposed relative to the air-water mixing component 2, that is, the concave structure 32 is disposed on the center position of the bubble cutting component 3, the one or more impurity discharge passages 31 are disposed on the center position of the concave structure 32, it is equivalent that the one or more impurity discharge passages 31 are disposed on a maximum-groove-depth position of the concave structure 32, as the large amount of the impurities accumulated to the groove bottom of the concave structure 32 along the groove wall of the concave structure 32, the one or more impurity discharge passages 31 just directly face the position where the impurities are accumulated in the bubble cutting component 3, ensuring the impurities to be directly discharged from the one or more impurity discharge passages 31.

When the concave structure 32 is coaxially disposed relative to the air-water mixing component 2, the protruding structure 33 is disposed around the periphery of the concave structure 32, as the one or more impurity discharge passages 31 are disposed on the position of the protruding structure 33 farthest from the center thereof, that is, the one or more impurity discharge passages 31 are disposed at a minimum-height position of the protruding structure 33, it is equivalent that the one or more impurity discharge passages 31 are disposed on a position of an edge of the protruding structure 33, as the large amount of the impurities are dispersed to the edge of the protruding structure 33 along the side walls of the protruding structure 33, the one or more impurity discharge passages 31 just directly face the position where the impurities are dispersed in the bubble cutting component 3, ensuring the impurities to be directly discharged from the one or more impurity discharge passages 31.

As shown in FIG. 15 , when the protruding structure 33 is coaxially disposed relative to the air-water mixing component 2, that is, the protruding structure 33 is disposed on the center position of the bubble cutting component 3, as the one or more impurity discharge passages 31 are disposed on the position of the protruding structure 33 farthest from the center thereof, that is, the one or more impurity discharge passages 31 are disposed on the minimum-height position of the protruding structure 33, it is equivalent that the one or more impurity discharge passages 31 are disposed on the position of the edge of the protruding structure 33, as the large amount of the impurities are dispersed to the edge of the protruding structure 33 along the side walls of the protruding structure 33, the one or more impurity discharge passages 31 just directly face the position where the impurities are dispersed in the bubble cutting component 3, ensuring the impurities to be directly discharged from the one or more impurity discharge passages 31.

The protruding structure 33 and the air-water mixing component 2 are coaxially disposed, the concave structure 32 is disposed around the periphery of the protruding structure 33, as the one or more impurity discharge passages 31 are disposed at the center position of the concave structure 32, it is equivalent that the one or more impurity discharge passages 31 are disposed on the maximum-groove-depth position of the concave structure 32, as the large amount of the impurities are accumulated to the groove bottom of the concave structure 32 along the groove wall of the concave structure 32, the one or more impurity discharge passages 31 just directly face the position where the impurities are accumulated in the bubble cutting component 3, ensuring the impurities to be directly discharged from the one or more impurity discharge passages 31.

It can be understood that in this case, a number and a position of the one or more impurity discharge passages 31 can be one or more, one of the one or more impurity discharge passages 31 can be merely disposed at the center position of the concave structure 32, or the one of the one or more impurity discharge passages 31 can be merely disposed at the position of the protruding structure 33 farthest from the center thereof, or multiple of the one or more impurity discharge passages 31 are respectively disposed at the center position of the concave structure 32 and the position of the protruding structure 33 farthest from the center thereof.

**In** an embodiment, a number of the one or more protruding structures 33 is multiple, and the concave structure 32 is disposed between two adjacent ones of the one or more protruding structures 33; and/or, a number of the one or more concave structures 32 is multiple, and the protruding structure 33 is disposed between two adjacent ones of the one or more concave structures 32.

It can be understood that numbers of the one or more protruding structures 33 and the one or more concave structures 32 can both be multiple, the one or more protruding structures 33 and the one or more concave structures 32 are mutually nested, and radii of the one or more protruding structures 33 and the one or more concave structures 32 are different. At this time, a cross section of the bubble cutting component 3 is similar to a continuous folded line structure, ensuring the impurities to be not temporarily left on the top of the bubble cutting component 3, and all of the impurities will slide to a bottom of the bubble cutting component 3.

It can be understood that when a radius of the bubble cutting component 3 is a preset value, when the numbers of the one or more protruding structures 33 and the one or more concave structures 32 are more, the angles of the one or more protruding structures 33 and the one or more concave structures 32 inclined along the second direction becomes smaller, that is, slopes of inclined surfaces are slower, which is possible to affect a sliding speed of the impurities, therefore, the number of the one or more protruding structures 33, the number of the one or more concave structures 32, and slopes of the one or more protruding structures 33 and slopes of the one or more concave structures 32 can be selected according to actual needs, so that the number and the slopes are in a preset balance correlation, thereby ensuring the timeliness of discharging the impurities.

In an embodiment, a projection of the air-water mixing component 2 at least partially covers a projection of the bubble cutting component 3 along the water flow direction.

As the projection of the bubble cutting component 3 is covered by the projection of the air-water mixing component 2, the micro-bubble water discharged by the air-water mixing component 2 can directly pass through the bubble cutting component 3 to achieve filtration of the impurities while ensuring the micro-bubble component to directly face the bubble cutting component 3.

In an embodiment, the bubble cutting component 3 comprises a plurality of filter screens 34 stacked along the water flow direction; therein, in the plurality of filter screens 34, at least some of the filter screens 34 have different mesh numbers. A filter screen 34 located at a top layer along the water flow direction has a largest mesh number; and the filter screen 34 located at the top layer along the water flow direction has a mesh number greater than or equal to 200 meshes.

For example, some of the filter screens 34, i.e., the filter screen 34 located at the top layer along the water flow direction, can be one or more filter screens with sparse pores, and some of the filter screens 34, i.e., a filter screen 34 below the filter screen 34 located at the top layer, can be one or more filter screens with dense pores, and multiple of the one or more filter screens with sparse pores and multiple of the one or more filter screens with the dense pores form the bubble cutting component 3 with a pattern of alternating sparseness and density that are alternately stacked, and effects of cutting the bubbles are improved.

This embodiment further provides a water outlet device, which is suitable for the technical arts of showers, faucets, and toilets, and the water outlet device comprises the micro-bubble bubbler.

The water outlet device provided in this embodiment achieves the primary filtration of the water flow flowing along the water flow direction to prevent the impurities from entering into the micro-bubble bubbler by setting the filter component 1; the air is introduced into the air-water mixing component 2 and mixed with the water flow to generate the bubbles to form the bubble water by setting the air-water mixing component 2; and the bubbles in the bubble water are cut into the tiny bubbles to form the micro-bubble water by setting the bubble cutting component 3, so that the micro-bubble water takes away the dirt in the pores or the fruits and vegetables by the tiny bubbles, thereby improving cleanliness.

At the same time, at least part of the bubble cutting component 3 forms the angle with the first direction, the angle is less than 90 degrees or greater than 90 degrees, the bubble cutting component 3 is obliquely disposed instead of being horizontally disposed, if the impurities on the bubble cutting component 3 are left on the bubble cutting component 3, the bubble cutting component 3 acts as the guiding slope, when the high-speed spraying water flow is sprayed, the impurities will slide down along the bubble cutting component 3 until sliding to the bottom position of the bubble cutting component 3 along the water flow direction, that is, the impurities will be accumulated at the bottom position of the bubble cutting component 3 instead of spreading throughout the entire bubble cutting component 3, thereby reducing the clogging risk of holes of the filter screens of the entire bubble cutting component 3. At the same time, as the impurities in the micro-bubble water will be left on the bubble cutting component 3, by setting the one or more impurity discharge passages 31 on the bubble cutting component 3, the one or more impurity discharge passages 31 provide a passage for discharging the impurities to discharge the impurities from an inner side of the micro-bubble bubbler; by setting the one or more impurity discharge passages 31 along the water flow direction, the one or more impurity discharge passages 31 and the flow direction of the water flow are in the same direction, and the water flow sprays to provide power from a movement of the impurities, so that the impurities are smoothly discharged from the one or more impurity discharge passages 31, an effects of discharging the impurity are good.

**In** an embodiment, the water outlet device further comprises a water inlet pipe, the water inlet pipe is in communication with the micro-bubble bubbler, and the water inlet pipe is used to supply the water flow to the micro-bubble bubbler.

Other embodiments of the present disclosure are easily thought out by person of skill in the technical art after considering the inventions disclosed in the specification and the practice herein. It is intended that the present disclosure covers any modifications, uses or adaptive variations of the present disclosure, these modifications, uses or adaptive variations follow general principles of the present disclosure and comprise the common knowledge or the conventional technical methods in the technical art and not disclosed in the present disclosure. It is intended that the specification and the cited embodiments are merely considered as examples, and an exact scope and a spirit of the present disclosure are defined by the accompanying claims.

It should be understood that the present disclosure is not limited to the exact structure described above and illustrated the accompanying drawings and can be modified and varied without departing from the scope thereof. The protective scope of the present disclosure is merely limited by the accompanying claims.

## Claims

1. A micro-bubble bubbler, **characterized in that**, it comprises:
a filter component (1) for filtering water flow;
an air-water mixing component (2) for converting the water flow into bubble water, and a water outlet direction of the air-water mixing component is a first direction;
a bubble cutting component (3) for cutting the bubble water so as to cut bubbles in the bubble water into tiny bubbles to form micro-bubble water;
at least part of the bubble cutting component (3) forms an angle with the first direction, and the bubble cutting component (3) comprises one or more impurity discharge passages (31), and the one or more impurity discharge passages (31) are used to discharge impurities; and
the angle is not equal to 90 degrees.

2. The micro-bubble bubbler according to claim 1, **characterized in that**, the one or more impurity discharge passages (31) are disposed at one or more positions of the bubble cutting component (3) farthest from the air-water mixing component (2) along the water flow direction.

3. The micro-bubble bubbler according to claim 1, **characterized in that**, the bubble cutting component (3) is concave in a direction away from the air-water mixing component (2) to form one or more concave structures (32) along the water flow direction.

4. The micro-bubble bubbler according to claim 3, **characterized in that**, the one or more impurity discharge passages (31) are disposed at one or more maximum-groove-depth positions of the one or more concave structures (32) along the water flow direction.

5. The micro-bubble bubbler according to claim 1, **characterized in that**, the bubble cutting component (3) protrudes in a direction adjacent to the air-water mixing component (2) to form one or more protruding structures (33).

6. The micro-bubble bubbler according to claim 5, **characterized in that**, the one or more impurity discharge passages (31) are disposed on one or more minimum-height positions of the one or more protruding structures (33) along the water flow direction.

7. The micro-bubble bubbler according to claim 1, **characterized in that**, the bubble cutting component (3) is concave in a direction away from the air-water mixing component (2) to form one or more concave structures (32) along the water flow direction, and the bubble cutting component (3) protrudes in a direction adjacent to the air-water mixing component (2) to form one or more protruding structures (33).

8. The micro-bubble bubbler according to claim 7, **characterized in that**, the one or more concave structures (32) are coaxially arranged relative to the air-water mixing component (2), and the one or more protruding structure (33) are disposed around one or more peripheries of the one or more concave structures (32); or,
the one or more protruding structures (33) are coaxially arranged relative to the air-water mixing component (2), and the one or more concave structures (32) are disposed around one or more peripheries of the one or more protruding structures (33).

9. The micro-bubble bubbler according to claim 8, **characterized in that**, the one or more impurity discharge passages (31) are disposed at one or more centers of the one or more concave structures (32); and/or,
the one or more impurity discharge passages (31) are disposed at one or more positions of the one or more protruding structures (33) farthest from one or more centers thereof.

10. The micro-bubble bubbler according to claim 8, **characterized in that**, the number of the one or more protruding structures (33) is multiple, and the one or more concave structures (32) are disposed between two adjacent ones of the one or more protruding structures (33); and/or,
the number of the one or more concave structures (32) are multiple, and the one or more protruding structures (33) are disposed between two adjacent ones of the one or more concave structures (32).

11. The micro-bubble bubbler according to claim 7, **characterized in that**, the one or more protruding structures (33) and the one or more concave structures (32) adjacent thereof are at least partially overlapped.

12. The micro-bubble bubbler according to any of claims 1-11, **characterized in that**, the one or more impurity discharge passages (31) are one or more through holes disposed on the bubble cutting component (3).

13. The micro-bubble bubbler according to claim 12, **characterized in that**, a cross section of a through hole is any one of a circle, an arc, a triangle and a polygon.

14. The micro-bubble bubbler according to any of claims 1-11, wherein the bubble cutting component (3) comprises a plurality of filter screens (34) that are stacked along the water flow direction;
wherein, at least some filter screens (34) in the plurality of filter screens (34) have different mesh numbers; a filter screen (34) at a top along the water flow direction has a largest mesh number; and
the mesh number of the filter screen (34) at the top along the water flow direction is larger than and equal to 200 meshes.

15. The micro-bubble bubbler according to claim 1, **characterized in that**, it further comprises a water outlet cover (4), the filter component (1) is disposed upstream of the air-water mixing component (2) along the water flow direction; and the bubble cutting component (3) is disposed between the water outlet cover (4) and the air-water mixing component (2).

16. A water outlet device, **characterized in that**, it comprises the micro-bubble bubbler according to any one of claims 1-15.
